# EUROPÄISCHE PATENTSCHRIFT

(11) **EP 1 472 108 B1**
(45) Veröffentlichungstag und Bekanntmachung des Hinweises auf die Patenterteilung: **22.03.2006**
(21) Anmeldenummer: 02774320.2
(22) Anmeldetag: 10.09.2002
(51) Int. Cl.: B60K 6/04

(54) **VERFAHREN ZUR EINSTELLUNG EINES BETRIEBSPUNKTES EINES HYBRIDANTRIEBES EINES FAHRZEUGES**
METHOD FOR ADJUSTING AN OPERATING POINT OF A HYBRID DRIVE OF A VEHICLE
PROCEDE DE REGLAGE DU POINT DE FONCTIONNEMENT DE L'ENTRAINEMENT HYBRIDE D'UN VEHICULE

(30) Priorität: 28.01.2002 DE 10203064
(43) Veröffentlichungstag der Anmeldung: 03.11.2004
(73) Patentinhaber: ROBERT BOSCH GMBH, 70442 Stuttgart (DE)
(72) Erfinder: BISCHOFF, Claus, 70469 Stuttgart (DE)
(86) Internationale Anmeldenummer: PCT/DE2002/003360
(87) Internationale Veröffentlichungsnummer: WO 2003/064200

(56) Entgegenhaltungen:
- DE-A- 10 024 235
- DE-A- 19 930 391

## Beschreibung

Die Erfindung betrifft ein Verfahren zur Einstellung eines Betriebspunktes eines Hybridantriebes eines Fahrzeuges, wobei der Hybridantrieb als Antriebsmaschinen eine Verbrennungskraftmaschine und wenigstens zwei elektrische Maschinen umfasst und die Abtriebswellen der Antriebsmaschinen mit einem Antriebsstrang des Fahrzeuges wirkverbindbar sind.

### Stand der Technik

Hybridantriebe für Fahrzeuge sind bekannt. Bei den hier angesprochenen Hybridantrieben wird eine Verbrennungskraftmaschine mit wenigstens zwei elektrischen Maschinen kombiniert, so dass mehrere Antriebsquellen für das Fahrzeug zur Verfügung stehen. Entsprechend vorgegebener Anforderungen durch einen Fahrzeugführer können hierbei die Antriebsquellen wahlweise ihre Antriebsmomente in einen Antriebsstrang des Fahrzeuges einspeisen. Hierdurch ergeben sich in an sich bekannter Weise in Abhängigkeit konkreter Fahrsituationen unterschiedliche Antriebsgestaltungsmöglichkeiten, die insbesondere der Verbesserung eines Fahrkomforts und der Reduzierung eines Energieeinsatzes sowie der Reduzierung einer Schadstoffemission dienen.

Bei Hybridantrieben für Fahrzeuge sind serielle Anordnungen, parallele Anordnungen und gemischte Anordnungen von Verbrennungskraftmaschine und elektrischen Maschinen bekannt. Je nach Anordnung sind die elektrischen Maschinen direkt oder indirekt in den Antriebsstrang der Verbrennungskraftmaschine schaltbar. Zur Wirkverbindung der Verbrennungskraftmaschine und/oder der elektrischen Maschinen ist bekannt, diese über Getriebe, beispielsweise Planetengetriebe oder dergleichen, und Kupplungen miteinander wirkverbindbar anzuordnen.

Um einen Fahrerwunsch nach einer Antriebsleistung des Hybridantriebes optimal umsetzen zu können, ist eine koordinierte Ansteuerung der Antriebsmaschinen des Hybridantriebes erforderlich, die bekanntermaßen durch ein so genanntes Motorsteuergerät erfolgt. Hierbei muss in jeder Fahrsituation des Fahrzeuges der Fahrerwunsch in optimaler Weise mit den vom Fahrzeug zur Verfügung gestellten Ressourcen befriedigt werden. Bekannte Betriebsstrategien für Hybridantriebe zeichnen sich im Wesentlichen dadurch aus, dass sie für die Verbrennungskraftmaschine in Abhängigkeit von spezifischen Eingangsgrößen wie Antriebsleistungsforderung, Fahrzeuggeschwindigkeit, Fahrbahnsteigung und dergleichen, einen optimierten Betriebspunkt definieren. Dabei wird angestrebt, die Verbrennungskraftmaschine möglichst außerhalb des wirkungsgradungünstigen Teillastbereiches zu betreiben und gegebenenfalls bei Kleinst-Wunschabtriebsleistungen abzuschalten. In diesen Fällen übernimmt die wenigstens eine elektrische Maschine den Antrieb des Fahrzeuges. Bekannt ist auch, die Verbrennungskraftmaschine entlang einer optimalen Verbrauchskennlinie zu steuern. Bei diesen bekannten Betriebsstrategien ist nachteilig, dass die Wirkungsgrade der elektrischen Antriebsmaschinen und die Auswirkungen des Betriebsverhaltens der elektrischen Antriebsmaschinen auf elektrische Energiespeicher (Batterien) unberücksichtigt bleiben.

Das Dokument DE10024235 offenbart ein Verfahren nach dem Oberbegriff des Anspruchs 1.

### Vorteile der Erfindung

Das erfindungsgemäße Verfahren mit den in Anspruch 1 genannten Merkmalen bietet demgegenüber den Vorteil, dass bei Hybridantrieben mit einer Verbrennungskraftmaschine und wenigstens zwei elektrischen Maschinen zur Einstellung eines Betriebspunktes des Hybridantriebes auch die Wirkungsgrade der elektrischen Antriebskompönenten und die Auswirkungen des Betriebsverhaltens der elektrischen Antriebsmaschinen auf elektrische Energiespeicher berücksichtigt sind. Dadurch, dass in Abhängigkeit eines Wunschabtriebsmomentes und einer momentanen Fahrzeuggeschwindigkeit Betriebspunkte der elektrischen Maschinen derart eingestellt werden, dass die Summe der mechanischen Leistungen und der elektrischen Verluste aller elektrischen Maschinen des Hybridantriebes gleich Null ist, wird vorteilhaft erreicht, dass bei stationären Fahrzuständen des Hybridantriebes die elektrischen Energiespeicher unbeteiligt bleiben und deren Batterieleistung zu Null gesteuert wird. Bei Hybridantrieben mit elektrischen Maschinen kommen Hochleistungsbatterien zum Einsatz, die einen erheblichen Anschaffungsaufwand erfordern. Dadurch, dass durch die Betriebsstrategie der elektrischen Maschinen die Batterieleistung in stationären Fahrzuständen zu Null gesteuert wird, wird die Belastung der Hochleistungsbatterien vermindert und somit deren Gesamtbetriebslebensdauer vergrößert. Insbesondere kann hierdurch die Betriebslebensdauer der Hochleistungsbatterie an die Lebensdauer des Fahrzeuges, das den Hybridantrieb aufweist, angeglichen werden. Somit ergeben sich ökonomische Einsparpotentiale, die die Effektivität der Hybridantriebe wesentlich vergrößern. In dem Moment, wo die Summe der mechanischen Leistungen und der elektrischen Verluste aller elektrischen Maschinen gleich Null ist, werden motorisch arbeitende elektrische Maschinen durch wenigstens eine generatorisch arbeitende,elektrische Maschine mit Energie versorgt, die darüber hinaus auch alle elektrischen Verluste der elektrischen Maschinen abdeckt. Dies gestattet, die Batterieleistung in stationären Fahrzuständen auf Null zu steuern.

In bevorzugter Ausgestaltung der Erfindung ist vorgesehen, dass bei Einstellung der Betriebspunkte der elektrischen Maschinen wenigstens ein Optimierungskriterium, insbesondere ein minimaler Kraftstoffmomentanverbrauch der Verbrennungskraftmaschine, berücksichtigt wird. Hierdurch lässt sich der Betriebspunkt des Hybridantriebes derart wählen, dass neben einer geringen Belastung der Hochleistungsbatterien über deren Gesamtlebensdauer gleichzeitig ein möglichst minimaler Kraftstoffverbrauch und somit eine möglichst minimale Schadstoffemission des Hybridantriebes erzielbar ist.

Weitere bevorzugte Ausgestaltungen der Erfindung ergeben sich aus den übrigen, in den Unteransprüchen genannten Merkmalen.

### Zeichnungen

Die Erfindung wird nachfolgend in Ausführungsbeispielen anhand der zugehörigen Zeichnungen näher erläutert. Es zeigen:
- Figur 1: schematisch einen Hybridantrieb;
- Figur 2: ein Blockschaltbild eines Verfahrens zur Einstellung eines Betriebspunktes des Hybridantriebes;
- Figur 3: ein Ersatzmodell des Hybridantriebes;
- Figur 4: ein Blockschaltbild einer Betriebsstrategie für den Hybridantrieb;
- Figur 5: Kennfelder für optimierte Betriebspunkte der Verbrennungskraftmaschine des Hybridantriebes und
- Figur 6: ein optimiertes Fahrstufenkennfeld des Hybridantriebes.

### Beschreibung der Ausführungsbeispiele

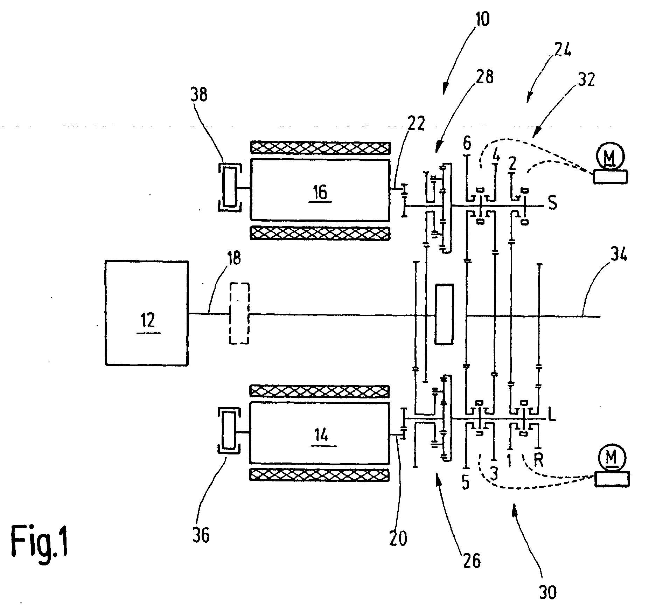

Figur 1 zeigt schematisch einen insgesamt mit 10 bezeichneten Hybridantrieb eines Kraftfahrzeuges. Der Hybridantrieb 10 umfasst eine Verbrennungskraftmaschine 12 sowie eine erste elektrische Maschine 14 und eine zweite elektrische Maschine 16. Eine Kurbelwelle 18 der Verbrennungskraftmaschine 12 und Antriebswellen 20 beziehungsweise 22 der elektrischen Maschinen 14 und 16 sind mit einer Getriebeanordnung 24 wirkverbunden. Hierbei ist die Antriebswelle 20 mit einem ersten Planetengetriebe 26 und die Antriebswelle 22 mit einem zweiten Planetengetriebe 28 verbunden. Ein Hohlrad des Planetengetriebes 26 ist mit einem Schaltgetriebe 30 und ein Hohlrad des Planetengetriebes 28 mit einem Schaltgetriebe 32 verbunden. Die Schaltgetriebe 30 und 32 wiederum sind mit einer Abtriebswelle 34 der Getriebeanordnung 24 verbunden. Die Abtriebswelle 34 ist mit einer Antriebsachse des nicht dargestellten Kraftfahrzeuges wirkverbunden.

Aufbau und Wirkungsweise eines derartigen Hybridantriebes 10 sind allgemein bekannt, so dass im Rahmen der vorliegenden Beschreibung hierauf nicht näher eingegangen wird. Insbesondere kann durch gezielte Ansteuerung der Verbrennungskraftmaschine 12 und/oder der elektrischen Maschinen 14 und 16 von diesen ein unterschiedliches Antriebsmoment auf die Abtriebswelle 34 abgefordert werden. Somit lassen sich verschiedene Betriebsmodi des Hybridantriebes 10 einstellen. Die Schaltgetriebe 30 und 32 gestatten durch Betätigen eines Schaltgebers in bekannter Weise das Einlegen unterschiedlicher Gänge, die hier mit den Gängen 1, 2, 3, 4, 5 und 6 sowie einen Rückwärtsgang R bezeichnet sind. Die elektrischen Maschinen 14 und 16 können jeweils im Generatorbetrieb oder Motorbetrieb betrieben werden und dienen beispielsweise der Bereitstellung einer Bordnetzspannung des Kraftfahrzeuges und dem Aufladen eines Akkumulators. Den elektrischen Maschinen 14 und 16 sind jeweils Bremseinrichtungen 36 und 38 zugeordnet, mit denen Rotoren der elektrischen Maschinen 14 und 16 mechanisch gebremst werden können.

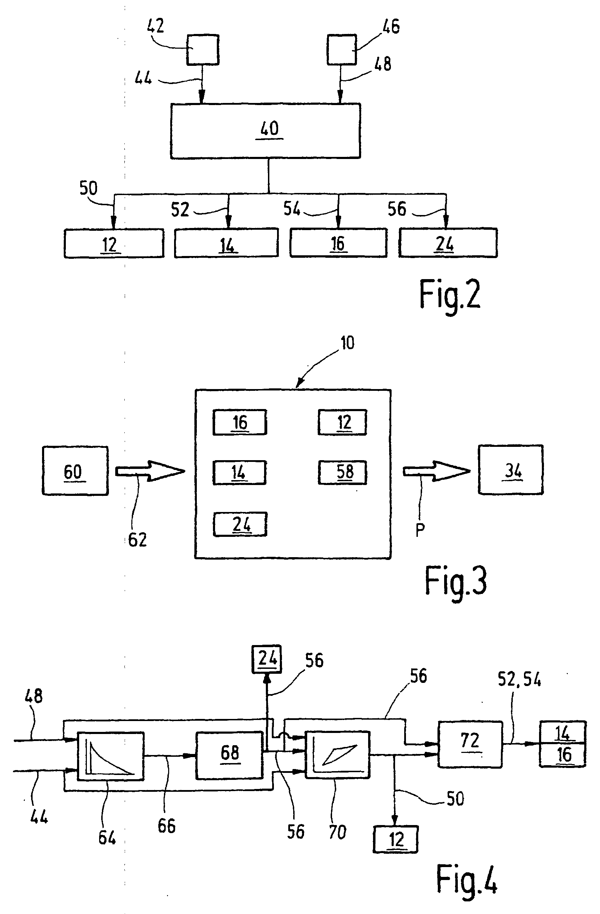

Figur 2 zeigt in einem Blockschaltbild einen Ausschnitt aus einem Motorsteuergerät zur Ansteuerung des Hybridantriebes 10. Das Motorsteuergerät umfasst einen Koordinator 40 zur Festlegung einer kennfeldbasierten Betriebsstrategie für den Hybridantrieb 10. Die Betriebsstrategie dient der Einstellung eines optimalen Betriebspunktes des Hybridantriebes 10, wie nachfolgend erläutert wird.

Der Koordinator 40 erhält von einem Geber 42 ein Signal 44, das der momentanen Geschwindigkeit v des Fahrzeuges entspricht. Von einem Geber 46 erhält der Koordinator 40 ein Signal 48, das einem Wunschabtriebsmoment eines Fahrzeugführers entspricht. Der Geber 46 kann beispielsweise mit einem Fahrpedal, einem Bremspedal oder einem Fahrautomaten des Fahrzeuges zusammenwirken.

Aus den Eingangssignalen 44 und 48 ermittelt der Koordinator 40 Signale 50, 52, 54, 56 zur Ansteuerung der Verbrennungskraftmaschine 12 der elektrischen Maschinen 14 und 16 und des Getriebes 24. Das Signal 50 beinhaltet eine Drehzahlvorgabe und eine Momentvorgabe für die Verbrennungskraftmaschine 12, das Signal 52 eine Drehzahlvorgabe und eine Momentvorgabe für die elektrische Maschine 14, das Signal 54 eine Drehzahlvorgabe und eine Momentvorgabe für die elektrische Maschine 16 und das Signal 56 eine Fahrstufenvorgabe für das Getriebe 24.

Der Koordinator 40 greift zur Durchführung der kennfeldbasierten Betriebsstrategie auf Kennfelder zurück. Zur Ermittlung dieser Kennfelder wird zunächst von dem in Figur 3 dargestellten Ersatzmodell für den Hybridantrieb 10 ausgegangen. Der Hybridantrieb 10 umfasst die Verbrennungskraftmaschine 12 sowie die elektrischen Maschinen 14 und 16 und das Getriebe 24. Den elektrischen Maschinen 14 und 16 ist eine Hochleistungsbatterie 58 zugeordnet, die von den elektrischen Maschinen 14 und 16 im Generatorbetrieb gespeist wird beziehungsweise die die elektrischen Maschinen 14 und 16 in deren Motorbetrieb speist. Im Regelfall arbeitet eine elektrische Maschine im Motorbetrieb und eine elektrische Maschine im Generatorbetrieb.

Zur Kraftstoffversorgung der Verbrennungskraftmaschine 12 ist ein Tank 60 vorgesehen, wobei sich ein Momentanverbrauch 62 an Kraftstoff ergibt. Der Hybridantrieb 10 liefert eine Abtriebsleistung P an die Abtriebswelle 34. Die Abtriebsleistung P ist hierbei eine Funktion der Fahrzeuggeschwindigkeit v (Signal 44) und des Abtriebswunschmomentes M (Signal 48).

Auf Basis dieses in Figur 3 gezeigten Ersatzmodells wird ein Optimierungskriterium definiert, das beispielsweise in einem minimalen Kraftstoffmomentanverbrauch 62 liegt.

Ein Fahrzustand des Fahrzeuges ist über die Abtriebsleistung P und somit über die Momentangeschwindigkeit v beziehungsweise das Wunschabtriebsmoment M definiert. Diese Fahrzustände lassen sich durch Betriebspunkte des Antriebsstranges, das heißt durch Betriebspunkte der Verbrennungskraftmaschine 12, der elektrischen Maschinen 14 und 16 sowie des Getriebes 24 realisieren.

Für die Erfindung ist vorgesehen, dass die Summe der mechanischen Leistungen der elektrischen Maschinen 14 und 16 und der elektrischen Verluste der elektrischen Maschinen 14 und 16 gleich Null ist. Dies heißt, eine der elektrischen Maschinen 14 und 16 arbeitet im generatorischen Betrieb und die andere der elektrischen Maschinen 14 und 16 im motorischen Betrieb. Hierbei versorgt die im generatorischen Betrieb arbeitende elektrische Maschine die im motorischen Betrieb arbeitende elektrische Maschine mit Energie und deckt darüber hinaus alle elektrischen Verluste der beiden elektrischen Maschinen 14 und 16 ab. Hierdurch wird erreicht, dass für diesen angenommenen stationären Fahrzustand die Leistung der Batterie 58 zu Null gesteuert ist.

Der Koordinator 40 ermittelt somit aus der Menge aller möglichen Antriebsstrangbetriebspunkte, mit denen einer der über die Abtriebsleistung P definierten Fahrzustände realisiert werden kann, zunächst alle Betriebspunkte der Verbrennungskraftmaschine 12 der elektrischen Maschinen 14 und 16 sowie des Getriebes 24, die die Vorgabe erfüllen, dass die Summe der mechanischen Leistungen und der elektrischen Verluste der elektrischen Maschinen gleich Null ist.

Diese diese Randbedingungen erfüllenden optimierten Betriebspunkte der Verbrennungskraftmaschine 12, der elektrischen Maschinen 14 und 16 sowie des Getriebes 24 werden einem weiteren Optimierungskriterium unterzogen, nämlich gemäß dem Beispiel einem möglichst minimalen Kraftstoffmomentanverbrauch 62. Hierdurch ergeben sich verbrauchsoptimierte Betriebspunkte der Verbrennungskraftmaschine 12, der elektrischen Maschinen 14 und 16 sowie des Getriebes 24. Diese verbrauchsoptimierten Betriebspunkte werden in Steuerkennfeldern abgelegt, auf die der Koordinator 40 zurückgreift. Da diese Steuerkennfelder aus Betriebskennfeldern der beteiligten Aggregate, das heißt der Verbrennungskraftmaschine 12, der elektrischen Maschinen 14 und 16 und der Getriebe 24 hervorgeht, sind in diesen Steuerkennfeldern implizit auch die Betriebsgrenzen dieser Aggregate, wie beispielsweise maximale Drehzahlen oder Volllastkennlinien, berücksichtigt und müssen nicht extra abgefragt werden.

Figur 4 zeigt in einem Blockschaltbild das erfindungsgemäße Verfahren zur Einstellung des Betriebspunktes des Hybridantriebes 10 durch den Koordinator 40. Zunächst werden die Eingangssignale 44 (Momentangeschwindigkeit v) und 48 (Wunschabtriebsmoment) mit einem Kennfeld 64 verknüpft, das eine optimale Fahrstufe für das Getriebe 24 bestimmt. Dieses der optimalen Fahrstufe entsprechende Signal 66 wird einer Fahrstufenfreigabe 68 zugeführt, die die optimale Fahrstufe als Soll-Fahrstufe freigibt und das Steuersignal 56 ausgibt. Die Freigabe der Soll-Fahrstufe kann hierbei in Abhängigkeit weiterer Parameter, beispielsweise zur Verhinderung von Schaltungen während einer Kurvenfahrt, von Doppelschaltungen oder dergleichen erfolgen. Das Signal 56 wird einerseits dem Getriebe 24 zur Einstellung der Schaltstufe bereitgestellt. Ferner wird das Signal 56 mit einem Kennfeld 70 zur Ermittlung eines Soll-Betriebspunktes der Verbrennungskraftmaschine 12 verknüpft. Das hieraus resultierende Signal 50 wird der Verbrennungskraftmaschine 12 sowie einem Baustein 72 zugeführt. Der Baustein 72 verknüpft das Signal 50 mit dem Signal 56 und stellt die Signale 52 und 54 zur Ansteuerung der elektrischen Maschinen 14 und 16 bereit, die deren optimalen Betriebspunkten entsprechen.

Anhand der Darstellung in Figur 4 wird deutlich, dass das erfindungsgemäße Verfahren sich in einfacher Weise realisieren lässt. Parallele Berechnungen der möglichen Betriebspunkte der Aggregate des Hybridantriebes 10 für unterschiedliche Fahrstufen sind nicht erforderlich, so dass hierfür kein großer Rechenaufwand benötigt wird. Die Freigabe der Schaltstufen erfolgt unmittelbar nach der Bestimmung der optimalen Schaltstufe, so dass im Falle einer Verhinderung der Freigabe der optimalen Fahrstufe die nachfolgenden Schritte zur Ermittlung der Signale 50 sowie 52 und 54 nicht unnötig durchgeführt werden. Die hierdurch nicht belegte Kapazität kann zur Suche nach einer Ausweichlösung, beispielsweise eine andere Fahrstufe, genutzt werden. Durch diese kennfeldbasierte Betriebsstrategie, in die die Kennfelder 64 und 70 einfließen, ergibt sich eine sehr zuverlässige Steuerkette, bei der sich der Aufwand für die Überwachung der Aggregate des Hybridantriebes 10 auf ein Minimum beschränken lässt, da die Kennfelder der Betriebsstrategie bereits dafür Sorge tragen, dass keine unzulässigen Betriebspunkte der Aggregate angefahren werden.

Eine Anpassung an unterschiedliche Hybridantriebe 10, beispielsweise an Hybridantriebe 10 mit einer unterschiedlichen Anzahl an Schaltstufen, lässt sich durch den modularen Aufbau der Steuerkette in einfacher Weise implementieren, indem lediglich eine Anpassung des Steuerkennfeldes 64 und der Fahrstufenfreigabe. 68 erfolgen muss.

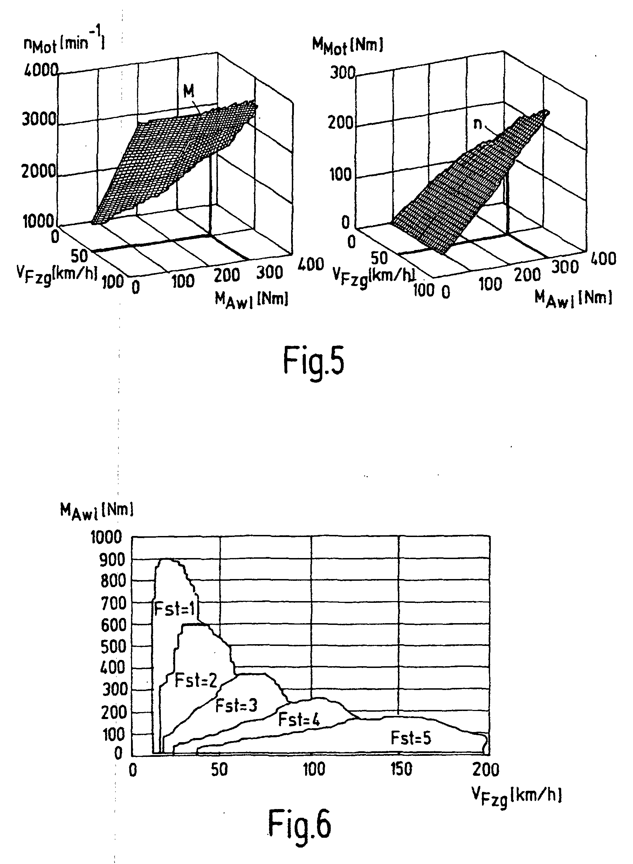

In Figur 5 sind beispielhaft Kennfelder 70 dargestellt, mittels denen die optimierten Betriebspunkte der Verbrennungskraftmaschine 12 ermittelbar sind. Hierbei ist jedem Fahrzustand, der durch die Fahrzeuggeschwindigkeit v (Signal 44) und das Abtriebswunschmoment (Signal 48) gekennzeichnet ist, jeweils ein Soll-Moment M_{Soll} und eine Soll-Drehzahl n_{Soll} zugeordnet. Diese den optimierten Betriebspunkten entsprechenden Werte werden als Signal 50 (Figur 4) der Verbrennungskraftmaschine 12 sowie dem Baustein 72 (Figur 4) zugeführt.

Figur 6 zeigt das Steuerkennfeld 64 zur Auswahl der optimalen Fahrstufe. Hierbei lassen sich in Abhängigkeit von der Fahrzeuggeschwindigkeit v (Signal 44) und dem Wunschmoment M (Signal 48) Fahrzustände realisieren, die mit unterschiedlichen Fahrstufen angefahren werden können. Durch Verknüpfung mit der Verbrauchsoptimierung des Momentanverbrauches 62 erhält man das beispielsweise in Figur 6 dargestellte optimierte Fahrstufenkennfeld, anhand dessen das Signal 66 (Figur 4) in Abhängigkeit der Geschwindigkeit v und des Wunschabtriebselementes n ausgegeben wird.

Bezieht man die vorstehenden allgemeinen Erläuterungen auf den Hybridantrieb 10 in der in Figur 1 dargestellten Ausführungsvariante, ergeben sich insgesamt sieben Systemvariablen, nämlich jeweils Momente und Drehzahlen der beiden elektrischen Maschinen 14 und 16 sowie der Verbrennungskraftmaschine 12 sowie die Fahrstufe des Getriebes 24 als Kombination zweier Gangstufen der Schaltgetriebe 30 und 32. Das Getriebe 24 als Kopplungselement der Verbrennungskraftmaschine 12 der elektrischen Maschinen 14 und 16 und der Abtriebswelle 34 liefert vier Randbedingungen. Dies sind zwei kinematische Randbedingungen für die Aggregatedrehzahlen und zwei dynamische Kopplungsbedingungen für die Aggregatemomente. Unter Berücksichtigung einer Minimierung des Kraftstoffmomentanverbrauchs können diese Randbedingungen zur Ermittlung der optimalen Fahrstufe für einen minimalen Momentanverbrauch an Kraftstoff der Verbrennungskraftmaschine 12 und einer Steuerung der Leistung der Batterie 58 zu Null berücksichtigt werden.

## Patentansprüche

1. Verfahren zur Einstellung eines Betriebspunktes eines Hybridantriebs eines Fahrzeuges, wobei der Hybridantrieb als Antriebsmaschinen eine Verbrennungskraftmaschine und wenigstens zwei elektrische Maschinen umfasst und die Antriebswellen der Antriebsmaschinen mit einem Antriebsstrang des Fahrzeugs wirkverbindbar sind, bei welchem Verfahren in Abhängigkeit eines Wunschantriebsmomentes (Signal 48) und einer momentanen Fahrzeuggeschwindigkeit (Signal 44) Betriebspunkte der elektrischen Maschinen eingestellt werden, **dadurch gekennzeichnet, dass** die Betriebspunkte derart eingestellt werden, dass die Summe der mechanischen Leistungen und der elektrischen Verlustleistungen aller elektrischen Maschinen (14, 16) des Hybridantriebes (10) gleich Null ist.

2. Verfahren nach Anspruch 1, **dadurch gekennzeichnet, dass** bei der Einstellung der Betriebspunkte der elektrischen Maschinen (14, 16) wenigstens ein Optimierungskriterium berücksichtigt wird.

3. Verfahren nach Anspruch 2, **dadurch gekennzeichnet, dass** als Optimierungskriterium ein minimaler Kraftstoffmomentanverbrauch (62) der Verbrennungskraftmaschine (12) herangezogen wird.

4. Verfahren nach einem der vorhergehenden Ansprüche, **dadurch gekennzeichnet, dass** die Betriebspunkte des Hybridantriebes (10) mit Hilfe einer kennfeldbasierten Betriebsstrategie eingestellt werden.

5. Verfahren nach einem der vorhergehenden Ansprüche, **dadurch gekennzeichnet, dass** die Drehzahl- und Momentvorgabe für die Verbrennungskraftmaschine (12) und die elektrischen Maschinen (14, 16) sowie die Vorgabe einer Schaltstufe für ein Getriebe (24) erfolgt.

6. Verfahren nach einem der vorhergehenden Ansprüche, **dadurch gekennzeichnet, dass** zunächst alle möglichen Antriebsstrangbetriebspunkte ermittelt werden und aus diesen möglichen Antriebsstrangbetriebspunkten die das wenigstens eine Optimierungskriterium berücksichtigenden Betriebspunkte ermittelt werden.

7. Verfahren nach einem der vorhergehenden Ansprüche, **dadurch gekennzeichnet, dass** diese optimierten Betriebspunkte in Kennfeldern abgelegt sind, auf die die Betriebsstrategie zugreift.

8. Verfahren nach einem der vorhergehenden Ansprüche, **dadurch gekennzeichnet, dass** eine optimale Fahrstufe ermittelt wird und diese optimale Fahrstufe als Soll-Fahrstufe in Abhängigkeit von definierten Betriebszuständen des Fahrzeuges freigegeben wird.

## Claims

1. Method for adjusting an operating point of a hybrid drive for a vehicle, with the hybrid drive having as drive machines an internal combustion engine and at least two electrical machines, and in which case the drive shafts of the drive machines can be operatively connected to a drive train in the vehicle, in which method operating points of the electrical machines are adjusted as a function of a desired drive torque (signal 48) and an instantaneous vehicle speed (signal 44), **characterized in that** the operating points are adjusted such that the sum of the mechanical powers and of the electrical power losses of all the electrical machines (14, 16) in the hybrid drive (10) is equal to zero.

2. Method according to Claim 1, **characterized in that** at least one optimization criterion is taken into account for the adjustment of the operating points of the electrical machines (14, 16).

3. Method according to Claim 2, **characterized in that** the minimum instantaneous fuel consumption (62) of the internal combustion engine (12) is used as the optimization criterion.

4. Method according to one of the preceding claims, **characterized in that** the operating points of the hybrid drive (10) are adjusted with the aid of an operating strategy which is based on a family of characteristics.

5. Method according to one of the preceding claims, **characterized in that** the rotation speed and torque of the internal combustion engine (12) and of the electrical machines (14, 16) as well as the gear selected for a gearbox (24) are preset.

6. Method according to one of the preceding claims, **characterized in that** all of the possible drive train operating points are determined first of all, and those operating points which take account of the at least one optimization criterion are determined from these possible drive train operating points.

7. Method according to one of the preceding claims, **characterized in that** these optimized operating points are stored in families of characteristics, which are accessed by the operating strategy.

8. Method according to one of the preceding claims, **characterized in that** an optimum driving gear is determined, and this optimum driving gear is enabled as the nominal driving gear as a function of defined operating states of the vehicle.

## Revendications

1. Procédé de réglage d'un point de fonctionnement d'un entraînement hybride d'un véhicule, l'entraînement hybride comprenant un moteur à combustion interne et au moins deux moteurs électriques qui servent de moteurs d'entraînement dont les arbres d'entraînement peuvent être reliés en fonctionnement à une chaîne cinématique du véhicule, et selon lequel des points de fonctionnement des moteurs électriques sont réglés en fonction d'un couple d'entraînement souhaité (signal 48) et d'une vitesse de véhicule instantanée (signal 44),
**caractérisé en ce que**
les points de fonctionnement sont réglés de telle sorte que la somme des puissances mécaniques et des puissances électriques dissipées de tous les moteurs électriques (14, 16) de l'entraînement hybride (10) est égale à zéro.

2. Procédé selon la revendication 1,
**caractérisé en ce que**
pendant le réglage des points de fonctionnement des moteurs électriques (14, 16), on tient compte d'au moins un critère d'optimisation.

3. Procédé selon la revendication 2,
**caractérisé en ce que**
comme critère d'optimisation on extrait une consommation instantanée minimale de carburant (62) du moteur à combustion interne (12).

4. Procédé selon l'une des revendications précédentes,
**caractérisé en ce qu'**
on règle les points de fonctionnement de l'entraînement hybride (10) à l'aide d'une stratégie de fonctionnement basée sur des champs de caractéristiques.

5. Procédé selon l'une des revendications précédentes,
**caractérisé en ce qu'**
on effectue une prédéfinition du régime et du couple pour le moteur à combustion interne (12) et les moteurs électriques (14, 16), ainsi que d'un rapport de commutation pour une boîte de vitesse (24).

6. Procédé selon l'une des revendications précédentes,
**caractérisé en ce que**
tout d'abord, on détermine tous les points de fonctionnement possibles dans la chaîne cinématique et, à partir de ces points de fonctionnement possibles dans cette chaîne cinématique, on détermine les points de fonctionnement tenant compte du critère d'optimisation.

7. Procédé selon l'une des revendications précédentes,
**caractérisé en ce qu'**
on dépose ces points de fonctionnement optimisés dans des champs de caractéristiques auxquels accède la stratégie de fonctionnement.

8. Procédé selon l'une des revendications précédentes,
**caractérisé en ce qu'**
on détermine un rapport de conduite optimal, et ce rapport de conduite optimal, est délivré, en fonction d'états de fonctionnement définis du véhicule comme rapport de consigne.
